# EUROPEAN PATENT SPECIFICATION

(11) **EP 1 073 002 B1**
(45) Date of publication and mention of the grant of the patent: **07.12.2005**
(21) Application number: 00304765.1
(22) Date of filing: 06.06.2000
(51) Int. Cl.: G06K 9/34

(54) **Character extracting method**
Verfahren zur Zeichentrennung
Procédé d'extraction de caractères

(30) Priority: 30.07.1999 JP 21715199
(43) Date of publication of application: 31.01.2001
(73) Proprietor: KABUSHIKI KAISHA TOSHIBA, Kawasaki-shi, Kanagawa-ken 210-8572 (JP)
(72) Inventor: Akagi, Takuma, IPD, Toshiba Corporation, Tokyo (JP)
(74) Representative: Shindler, Nigel

(56) References cited:
- US-A- 5 033 098
- US-A- 5 809 166
- LU Y: "Machine printed character segmentation--an overview" PATTERN RECOGNITION, PERGAMON PRESS INC. ELMSFORD, N.Y, US, vol. 28, no. 1, 1995, pages 67-80, XP004014034 ISSN: 0031-3203

## Description

### BACKGROUND OF THE INVENTION

### 1. Field of the Invention

The present invention relates to a character extracting method to extract bridged characters to each character at a time in a character recognition device which recognizes characters according to, for instance, input light and shade character images.

### 2. Description of the Related Art

Generally, the character recognition technology is broadly divided into input of character images, extraction of character lines, character extracting and character recognition.

Generally, bridged characters are extracted after binarizing input character images. The input character images are divided into a character area and a background area. At this time, plural characters are extracted to one character area in the bridged stated. In the prior art, these bridged characters are separated each other by obtaining structural and analytical separating points according to the shape of bridged characters. That is, when the shape of bridged characters have a dent such as valley, a character area was cut out to each character by judging the dent as the junction point.

However, a variety of patterns are considered for the shapes of junction points of bridged characters and the patterns that could be separated according to the prior art are limited only to a few special shapes out of these patterns.

Generally, in the case of document images of handwritten characters, for the most part of bridged characters when extracting them, characters on an input document image are already bridged from the first time when the document is input.

On the contrary, in the case of document images in printing type, the most part of causes for bridged characters that become a problem when characters are extracted are not actually bridged but are due to a low resolution of a scanner (a character image input device) and a binarization miss during the binarization processing.

Therefore, if returning back to light and shade images that are binarized input character images, a bridged point between characters should be detectable relatively easily.

However, when light and shade images only are simply used, a problem becomes more complicate including specifying of a character area, delay of processing speed and in addition, such ill effects as an error in character position estimation, etc. are caused and the performance is rather deteriorated

US 5809166 describes character recognition system in which pairs of adjacent vertical bars are first detected in the character image and it is also divided into discrete horizontal bands. Characters are recognised on the basis of the distribution of image data in each band between the detected vertical bars.

### SUMMARY OF THE INVENTION

It is, therefore, an object of the present invention according to claims 1, 7 and 12 is to provide a character extracting method that is able to highly precisely and efficiently find out bridged characters that are difficult to find from the shapes and separate them.

According to the present invention, there is provided a character extracting method in a character recognition device for recognizing characters according to input character images, comprising: a first step for obtaining a first binarized image of the input character images binarized in accordance with a first threshold value based upon at least a density value of each pixel in the input character images to separate the first binarized image into a character area and a background area; a second step for obtaining a second binarized image by binarizing portions corresponding to the character area separated in the first step in accordance with a second threshold value based upon a density value of each pixel corresponding to the character area of the first binarized image to separate the second binarized image into at least two areas; and a third step for separating the first binarized image into individual separated characters in accordance with the second binarized image separated in the second step.

### BRIEF DESCRIPTION OF THE DRAWINGS

Fig 1 is an enlarged view showing an example of an input document image before inputting by a scanner;
FIG. 2 is a diagram for explaining the state to input a document image by marking off with meshes;
FIG. 3 is a diagram showing an example of a light and shade image input by a scanner;
FIG. 4 is a diagram showing an example of a binarized image by binarizing the light and shade image shown in FIG. 3;
FIG. 5 is a block diagram schematically showing a structure of a character extracting device to which the character extracting method of the present invention is applicable;
FIG. 6 is a flowchart for explaining the character extracting method of the present invention;
FIG. 7 is a diagram showing an example of a first binarized image that is binarized in the first binarization unit;
FIG. 8 is a diagram showing an example of a second binarized image that is binarized in the second binarization unit; and
FIG. 9 is a flowchart for explaining a method for deciding a bridged character position in a character separation unit.

### DETAILED DESCRIPTION OF THE PREFERRED EMBODIMENTS

Preferred embodiments of the present invention will be described below referring to the attached drawings.

Further, in the following description it is assumed that the more small density values of pixels are, the more black those pixels will become, and the more large density values are, the more white the pixels will become. "density value" refers to the level or degree of whiteness of the pixel.

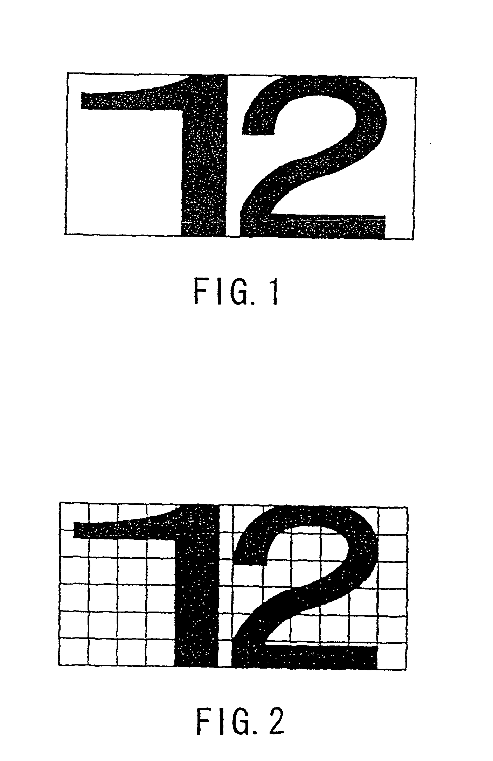

FIG. 1 shows an input document image enlarged before inputting by a scanner. Figures "1" and "2" are written closely each other; however, they are not bridged each other as there is a blank space between them. Now, let's consider a case to read such document images with a scanner.

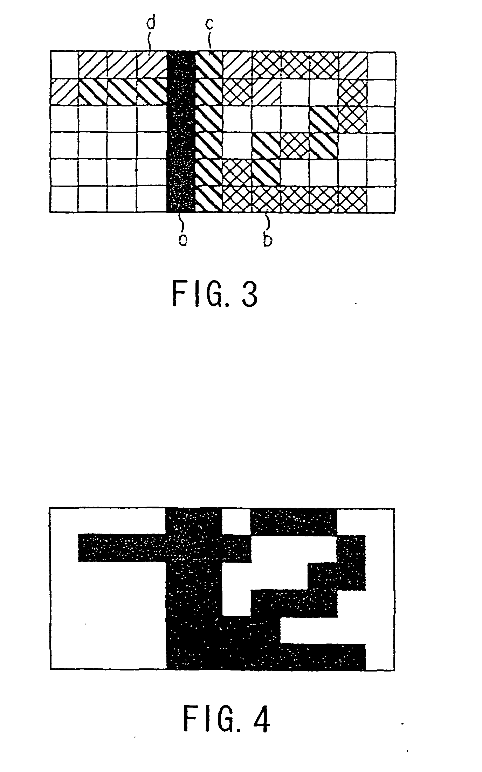

A scanner divides document images in such meshes as shown in FIG. 2, takes a mean value of densities in respective rectangles and inputs the mean density value as a representative density of pixels corresponding to the rectangles. Shown in FIG. 3 is an example of a light and shade image input by a scanner. In this example, a light and shade image is a vertically 6-dot and laterally 12-dot image.

In FIG. 3, the portion a painted out in black represents pixels having the smallest density value, the portion b shown by cross oblique lines represents pixels having a density value larger than the pixels a, the portion c shown in thick oblique lines represents pixels having a density value larger than the pixels b and the portion d shown fine oblique lines represents pixels having a density value larger than the pixels c, respectively.

When the width of the blank space between characters is narrower than rectangles acquired by a scanner, pixels in small density are obtained even when they are in the blank space portion as seen in FIG. 3. Therefore, when this image is binarized, a binarized image in a shape of two bridged characters is obtained as shown in FIG. 4.

In a conventional character extracting method, bridged characters were separated using only a binarized image shown in FIG. 4.

However, when looking the light and shade image shown in FIG. 3, the contour of a character is in a density larger than that of the central portion of the character. The bridged portion of characters is also not exceptional and pixels corresponding to the blank space are in a density larger than that of the character portion.

Therefore, in the present invention, portions in large density are found efficiently and by deciding a bridged character portion, a character area is separated to each character. This will be explained below in detail.

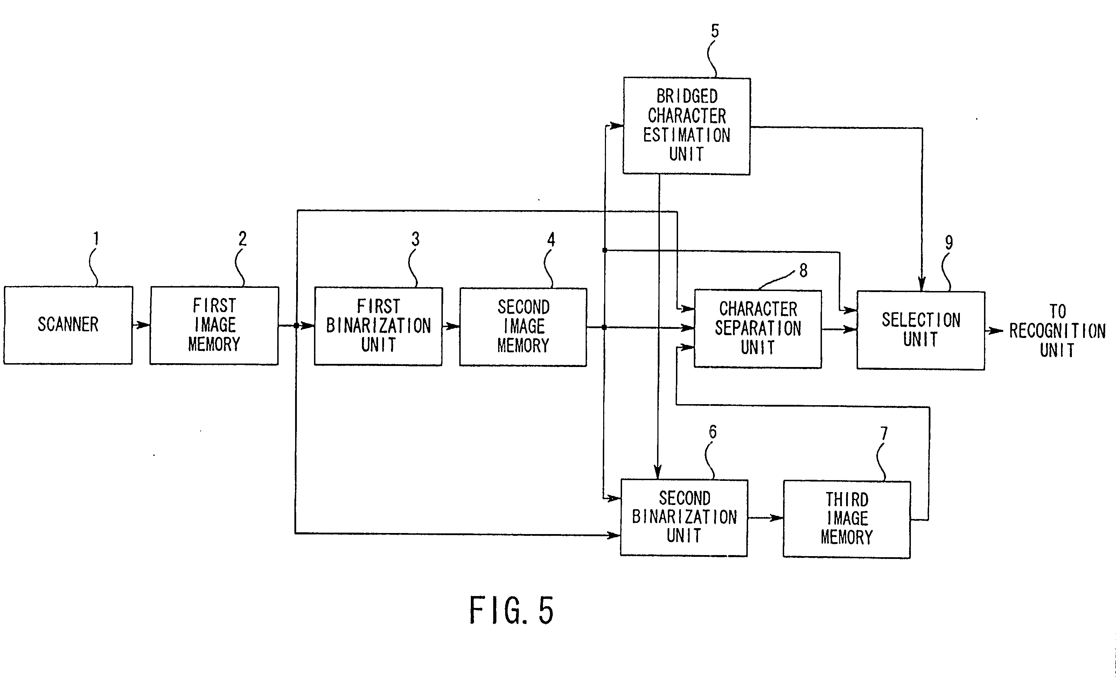

FIG. 5 is a block diagram showing the structure of a character extracting device to which the character extracting method of the present invention is applicable. In FIG. 5, a scanner 1, as a character image input means, reads an input document image optically and inputs such a light and shade image as shown in FIG. 3. The light and shade image input by the scanner 1 is temporarily stored in a first image memory 2.

A first binarization unit 3 binarizes the light and shade image temporarily stored in the first image memrory 2 according to, for instance, a known Ohtsu's binarization method (Refer to "Automatic Threshold Selection Method according to Discrimination and Minimum Square Standard", by Nobuyuki Ohtsu, Shingakuron (D), vol. J63-D, no. 4, pp. 349-356, 1980) and outputs such a first binarized image as shown in FIG. 4.

Furthermore, the binarization method for the light and shade image is disclosed in U.S.Patent No. 5,784,500 (Jul. 21, 1988).

The first binarized image output from the first binarization unit 3 is stored in a second image memory 4 temporarily. A bridged character estimation unit 5 estimates (judges) if there are bridged characters based on the first binarized image temporarily stored in the second image memory. Regarding the standard for estimation, in the case where a lateral size of a black pixel area is wider than a vertical size, it is estimated that plural characters are bridged.

A second binarization unit 6 operates when the bridged character estimation unit 5 estimates that plural characters are bridged, and when a light and shade image temporarily stored in the first image memory 2 and the first binarized image temporarily stored in the second image memory 4 are input, density values are first taken only from light and shade image pixels corresponding to positions of black pixels of the first binarized image and registered for a histogram.

Then, based on the obtained histogram, the second binarization unit 6 obtains a threshold value to halve the density value of the histogram using the above-mentioned known Ohtsu's binarization method. Only when a density value of the same coordinates of the light and shade image out of the black pixel of the binarized image is larger than the obtained threshold value, the black pixels are reversed to white pixels and a new binarized image (a second binarized image) is formed.

The second binarized image output from the second binarization unit 6 is stored temporarily in a third image memory 7. A character separation unit 8 decides bridged character positions according to the light and shade image temporarily stored in the first image memory 2, the first binarized image temporarily stored in the second image memory 4 and the second binarized image temporarily stored in the third image memory 7 and separates the character images to each character according to the information on this decided character bridge position. What is separated at this time is the character image (the first binarized image) obtained in the first binarization unit 3.

A selection unit 9 selects the stored contents of the second image memory 4 or the output of the character separation unit 8 based on the result of estimation by the bridged character estimation unit 5. That is, when the bridged character estimation unit 5 estimated that there are no bridged characters, the stored contents of the second image memory 4 are selected and when it is estimated that there are bridged characters, the output of the character separation unit 8 is selected.

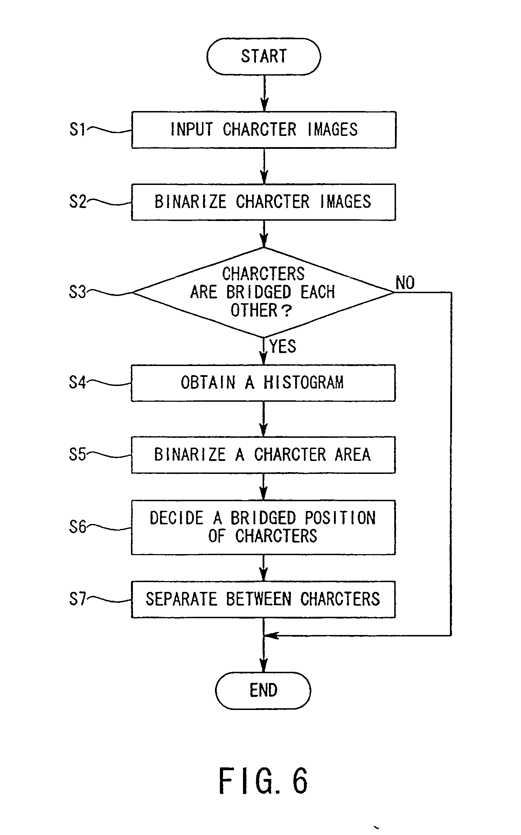

Next, the character extracting method of the present invention will be described in detail referring to a flowchart shown in FIG. 6. First, a light and shade character image is input to the scanner 1 and stored in the first image memory 2 temporarily (S1). Then, the light and shade image in the first image memory 2 is converted into the first binarized image in the first binarization unit 3 using the Ohtsu's binarization method and stored in the second image memory 4 temporarily (S2).

Then, the bridged character estimation unit 5 judges if there are bridged characters based on the obtained first binarized image in the second image memory 4 (S3). Regarding the standard for judging bridged characters, when a lateral size of a black pixel area is wider than a vertical size, it is judged that plural characters are bridged. When judged there are no bridged characters, the processing is terminated. In this case, the selection unit 9 selects the first binarized image in the second image memory 4 and forward it to the next recognition processing.

When judged there are bridged characters, the second binarization unit 6 takes density values only from light and shade image pixels corresponding to the positions of the black pixels of the first binarized image obtained in the first binarization unit 3 and registers for a histogram (S4). Then, based on the obtained histogram, a threshold value to halve the density value of the histogram is obtained using the Ohtsu's binarization method. When the density values of the same coordinates of the light and shade image out of the black pixels of the binarized image are larger than the threshold value obtained, the black pixels are reversed to the white pixels, and the second binarized image is formed and stored in the third image memory 7 temporarily (S5).

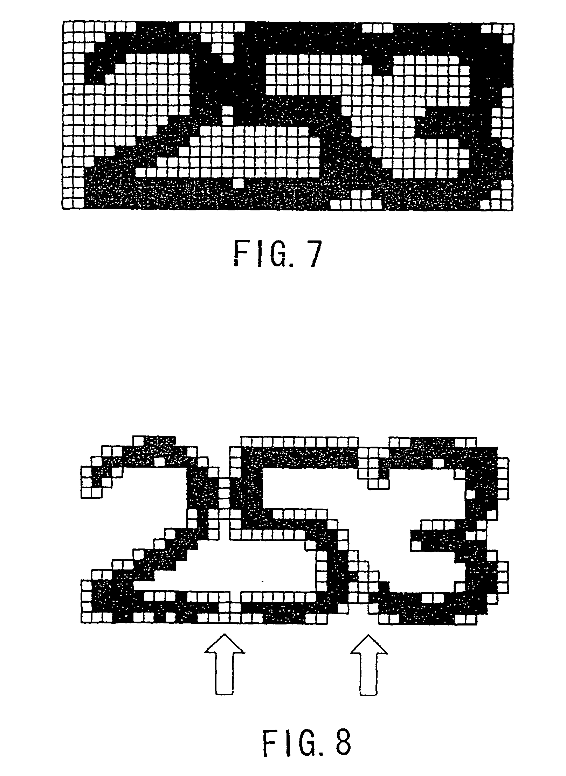

FIG. 7 shows an example of the first binarized image binarized in the first binarization unit 3 and FIG. 8 shows an example of the second binarized image binarized in the second binarization unit 6, and in FIGs. 7 and 8, the black rectangles are portions that are regarded to be black pixels in the binarization and white rectangles are portions that are regarded to be white pixels in the binarization.

When a density histogram is plotted again for a character area only and binarized, the portions that were made black pixels by the quantization error of the scanner as mentioned above; that is, the closed portions between characters or the contours of the characters are changed into the white pixels because of a density value. Therefore, in FIG. 8, it can be seen that a new blank space is produced between characters "2" and "5" and "5" and "3" (the arrow portions in FIG. 8).

Then, in the character separation unit 8, a bridged character position is decided (S6) based on the second binarized image obtained in the second binarization unit 6, the first binarized image obtained in the first binarization unit 3 and the light and shade image input with the scanner 1. The decision of bridged character position will be explained later in detail. Then, based on the information on the decided bridged character position, character images (the first binarized image obtained in the first binarization unit 3) is separated to each character (S7). In this case, the selection unit 9 selects the output of the character separation unit 8 and forward it to the next recognition processing.

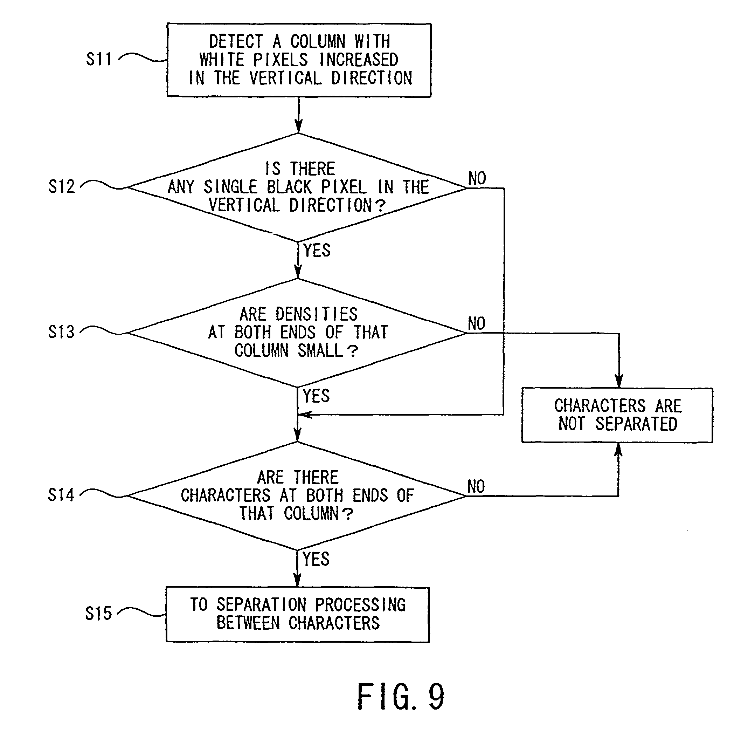

Next, the bridged character position deciding method in the character separation unit 8 will be explained in detail referring to a flowchart shown in FIG. 9. First, the first binarized image obtained in the first binarization unit 3 is compared with the second binarized image obtained in the second binarization unit 6 and columns containing much pixels that are newly turned to white pixels are detected (S11). Then, the columns detected in Step S11 are checked if there are single black pixels in the vertical direction of the second binarized image (S12).

When no single black pixels are detected in the vertical direction as a result of the above check, the operation proceeds to Step S14. When black pixels are detected, the light and shade image input by the scanner 1 is checked (S13). That is, a mean density value at the positions of black pixels in the first binarized image of said column at the same column of the light and shade image is obtained. The same processing is executed for several columns that are left and right to said column. When said column is a bridge to the left and right columns; that is, it is judged whether a mean value of the density values of the left and right columns is smaller than a mean value of density values of said columns. When the mean value is smaller as a result of this judgement, the process proceeds to Step S14 and when not smaller, the characters are withdrawn from the character separation process.

Then, whether there are characters at the left and right side (both sides) of the column obtained from the process in Step S12 or Step S13 is checked (S14). The white pixels obtained from the second binarized image are presented at the character edge in addition to the bridged point of characters as shown in FIG. 8. It is therefore necessary to check if there are characters at both ends of said column. For instance, the number of black pixels are counted over several columns at both ends of said column based on the first binarized image and if there were black pixels more than a certain value, it is regarded that there are characters.

When no character is found as a result of the check in Step S14, the characters are withdrawn from the character separation process, and when there are characters, the character separation process is executed by the character separation unit (S15).

Further, if the resolution of the scanner 1 that inputs character images is small in Step S12 of the flowchart shown in FIG. 9, jump to Step S14 even when there are some black pixels. In this case, as a standard for deciding a separation candidate, a difference between the black pixels of the first binarized image obtained in the first binarization unit 3 and the black pixels of the second binarized image obtained in the second binarization unit 6 is taken and a column having a larger difference is made a candidate column for the character separation. In this case, the threshold value for the size of difference is lowered if the resolution of the scanner 1 is low.

As described above, according to the above-mentioned embodiment, it is possible to separate bridged characters that could not be separated so far by a binarized image only. Further, the bridged character separation can be processed with considerably lighter load than all processes using a light and shade image only. Accordingly, the bridged characters that are difficult to find from the viewpoint of shape can be found and separated highly precisely and efficiently.

As described above in detail, according to the present invention, a character extracting method capable of finding and separating bridged characters highly precisely and efficiently from the viewpoint of shape can be provided.

## Claims

1. A character extracting method in a character recognition device for recognizing characters according to input light and shade character images, comprising:
a first step for obtaining a first binarized image of the input character images binarized in accordance with a first threshold value based upon at least a density value of each pixel in the input character images to separate the first binarized image into a character area and a background area;
a second step for obtaining a second binarized image by binarizing portions corresponding to the character area separated in the first step in accordance with a second threshold value based upon a density value of each pixel corresponding to the character area of the first binarized image to separate the second binarized image into at least two areas; and
a third step for separating the first binarized image into individual separated characters in accordance with the second binarized image separated in the second step.

2. A method according to claim 1, wherein the third step includes a step of separating the characters into individual characters using a pixel line or a pixel column as a separating point, which has a large difference between the first binarized image obtained in the first step and the second binarized image obtained in the second step.

3. A method according to claim 1, wherein the third step includes a step of comparing between density values at both sides of a region to be separated and a density value of the region itself to be separated and separating the characters into individual characters only when the density values at both sides are smaller than the density value of the region itself to be separated.

4. A method according to claim 1, wherein the second step includes a step of separating the characters into individual characters based on a histogram which is formed using the density values of the pixels at the positions applicable to the character area.

5. A method according to claim 2, wherein, when deciding a separating point based on a difference between the density value of the first binarized image obtained in the first step and the density value of the second binarized image obtained in the second step, the threshold value for deciding the separating point is varied based on a resolution value of the input character image.

6. A character separating method according to claim 1 further comprising the steps of:
a fourth step for judging whether character images are bridged based on the first binary images obtained in the first step, wherein the second and third steps are executed when the characters are judged as being bridged in the fourth step.

7. A character extracting device in a character recognition device for recognizing characters according to input light and shade character images, comprising:
first means for obtaining a first binarized image of the input character images binarized in accordance with a first threshold value based upon at least a density value of each pixel in the input character images to separate the first binarized image into a character area and a background area;
second means for obtaining a second binarized image by binarizing portions corresponding to the character area separated by the first means in accordance with a second threshold value based upon a density value of each pixel corresponding to the character area of the first binarized image to separate the second binarized image into two areas or more; and
third means for separating the first binarized image into individual separated characters in accordance with the second binarized image separated by the second means.

8. A device according to claim 7, wherein the third means includes means for separating the characters into individual characters using a pixel line or a pixel column as a separating point, which has a large difference between the first binarized image obtained by the first means and the second binarized image obtained by the second means.

9. A device according to claim 7 wherein the third means includes means for comparing between density values at both sides of a region to be separated and a density value of the region itself to be separated and separating the characters into individual characters only when the density values at both sides are smaller than the density value of the region itself to be separated.

10. A device according to claim 7, wherein the second means includes means for separating the characters into individual characters based on a histogram which is formed using density values of the pixels at the positions applicable to the character area.

11. A device according to claim 8, wherein the deciding a separating point based on a difference between the density value of the character area obtained by the first means and the density value of the area obtained by the second means, a threshold value for deciding a separating point is varied based on a resolution value of an input character image.

12. A character recognition device comprising:
a scanner for acquiring character images by optically reading input document images;
a first image memory to store the character images acquired by the scanner;
a first binarization unit for binarizing the character images stored in the first image memory to produce a first binarized image;
a second image memory for storing the first binarized image produced by the first binarization unit;
a bridge characters estimation unit to estimate whether there are bridged characters according to the first binarized image stored in the second image memory;
a second binarization unit for producing a second binarized image by reversing the black pixels to white pixels when the bridge character estimation unit estimates bridged plural characters, in which density values are taken only from the pixels of the character images at a position equivalent to that of the black pixelsof the first binarized images based on the character images stored in the first image memory and the first binarized image stored in the second image memory and a histogram is registered, and a threshold value is obtained based on the registered histogram, out of the black pixels of the first binarized image, whose density value at the same coordinates of the character images is higher than the obtained threshold value;
a third image memory for storing the second binarized image produced by the second binarization unit;
a character separation unit to decide a bridged character position based on the character images stored in the first image memory, the first binarized image stored in the second image memory and the second binarized image stored in the third image memory and separate bridged character image into individual characters according to the decided character position information; and
a recognition unit for recognising the individual characters separated by the character separation unit.

## Patentansprüche

1. Zeichenextraktionsverfahren in einer Zeichenerkennungsvorrichtung zum Erkennen von Zeichen gemäß der eingegebenen hellen und Schatten-Zeichenbildern, aufweisend:
einen ersten Schritt zum Erhalten eines ersten binärisierten Bildes der eingegebenen Zeichenbilder, die binärisiert sind in Übereinstimmung mit einem ersten Schwellenwert, basierend auf wenigstens einem Dichtewert jedes Pixels in den eingegebenen Zeichenbildern, um das erste binärisierte Bild zu separieren in einen Zeichenbereich und einen Hintergrundbereich;
einen zweiten Schritt zum Erhalten eines zweiten binärisierten Bildes durch Binärisieren von Abschnitten, korrespondierend mit dem Zeichenbereich, separiert im ersten Schritt in Übereinstimmung mit einem zweiten Schwellenwert, basierend auf einem Dichtewert jedes Pixels, der mit dem Zeichenbereich des ersten binärisierten Bildes korrespondiert, um das zweite binärisierte Bild zu separieren in wenigstens zwei Bereiche; und
einen dritten Schritt zum Separieren des ersten binärisierten Bildes in einzelne separierte Zeichen in Übereinstimmung mit dem zweiten binärisierten, im zweiten Schritt separierten Bild.

2. Verfahren nach Anspruch 1, wobei der dritte Schritt beinhaltet einen Schritt der Separierung der Zeichen in einzelne Zeichen unter Verwendung einer Pixellinie oder einer Pixelkolonne als ein Separierungspunkt, der eine große Differenz zwischen dem ersten binärisierten, im ersten Schritt erhaltenen Bildes und dem zweiten, im zweiten Schritt erhaltenen binärisierten Bildes aufweist.

3. Verfahren nach Anspruch 1, wobei der dritte Schritt beinhaltet einen Schritt des Vergleichens zwischen den Dichtewerten an beiden Seiten einer zu separierenden Region und einem Dichtewert der zu separierenden Region selbst, und Separieren der Zeichen in einzelne Zeichen, nur für den Fall, wenn die Dichtewerte an beiden Seiten kleiner sind als der Dichtewert der zu separierenden Region selbst.

4. Verfahren nach Anspruch 1, wobei der zweite Schritt beinhaltet einen Schritt des Separierens der Zeichen in einzelne Zeichen, basierend auf einem Histogramm, das gebildet wird unter Verwendung der Dichtewerte der Pixel an den zum Zeichenbereich anwendbaren Positionen.

5. Verfahren nach Anspruch 2, wobei bei Bestimmung eines Separierungspunktes, basierend auf einer Differenz zwischen dem Dichtewert des im ersten Schritt erhaltenen ersten binärisierten Bildes und dem Dichtewert des im zweiten Schritt erhaltenen zweiten binärisierten Bildes, der Schwellenwert zum Entscheiden des Separierungspunktes variiert wird, basierend auf einem Auflösungswert des eingegebenen Zeichenbildes.

6. Zeichenseparierungsverfahren nach Anspruch 1, weiterhin aufweisend die Schritte:
einen vierten Schritt zum Beurteilen, ob die Zeichenbilder verbunden sind, basierend auf den ersten im ersten Schritt erhaltenen ersten binären Bildern, wobei die zweiten und dritten Schritte durchgeführt werden, wenn die Zeichen dahingehend beurteilt werden, im vierten Schritt verbunden zu sein.

7. Zeichenextraktionsvorrichtung in einer Zeichenerkennungsvorrichtung zum Erfassen von Zeichen gemäß den eingegebenen hellen und Schatten-Zeichenbildern, aufweisend:
erstes Mittel zum Erhalten eines ersten binärisierten Bildes der eingegebenen Zeichenbilder, binärisiert in Übereinstimmung mit einem ersten Schwellenwert, basierend auf wenigstens einem Dichtewert jedes Pixels in den Eingabezeichenbildern, um das erste binärisierte Bild zu separieren in einen Zeichenbereich und einen Hintergrundbereich;
zweites Mittel zum Erhalten eines zweiten binärisierten Bildes durch Binärisieren von Bereichen, korrespondierend mit dem Zeichenbereich, separiert durch das erste Mittel in Übereinstimmung mit einem zweiten Schwellenwert, basierend auf einem Dichtewert jedes Pixels, korrespondierend mit dem Zeichenbereich des ersten binärisierten Bildes, um das zweite binärisierte Bild zu separieren in zwei Bereiche oder mehr; und
drittes Mittel zum Separieren des ersten binärisierten Bildes in einzelne separierte Zeichen in Übereinstimmung mit dem zweiten binärisierten Bild, separiert durch das zweite Mittel.

8. Vorrichtung nach Anspruch 7, wobei das dritte Mittel beinhaltet Mittel zum Separieren der Zeichen in einzelne Zeichen unter Verwendung einer Pixellinie oder einer Pixelkolonne als einen Separierungspunkt, der eine große Differenz zwischen dem durch das erste Mittel erhaltene erste binärisierte Bild und dem durch das zweite Mittel erhaltene zweite binärisierte Bild aufweist.

9. Vorrichtung nach Anspruch 7, wobei das dritte Mittel beinhaltet Mittel zum Vergleichen zwischen den Dichtewerten an beiden Seiten einer zu separierenden Region und einem Dichtewert der zu separierenden Region selbst, und Separieren der Zeichen in einzelne Zeichen, nur dann, wenn die Dichtewerte an beiden Seiten kleiner als der Dichtewert der zu separierenden Region selbst sind.

10. Vorrichtung nach Anspruch 7, wobei das zweite Mittel beinhaltet Mittel zum Separieren der Zeichen in einzelne Zeichen, basierend auf einem Histogramm, das gebildet wird unter Verwendung von Dichtewerten der Pixel an den zum Zeichenbereich anwendbaren Positionen.

11. Vorrichtung nach Anspruch 8, wobei das Bestimmen eines Separierungspunktes basiert auf einer Differenz zwischen dem Dichtewert des Zeichenbereichs, erhalten durch das erste Mittel, und dem Dichtewert des durch das zweite Mittel erhaltenen Bereichs, wobei ein Schwellenwert zum Bestimmen eines Separierungspunktes variiert wird, basierend auf einem Auflösungswert eines eingegebenen Zeichenbildes.

12. Zeichenerkennungsvorrichtung, aufweisend:
einen Scanner zum Aufnehmen von Zeichenbildern durch optisches Einlesen von Eingabedokumentbildern;
einen ersten Bildspeicher zum Speichern der Zeichenbilder, die durch den Scanner aufgenommen worden sind;
eine erste Binärisierungseinheit zum Binärisieren der im ersten Bildspeicher gespeicherten Zeichenbilder, um ein erstes binärisiertes Bild zu erzeugen;
einen zweiten Bildspeicher zum Speichern des ersten binärisierten Bildes, das erstellt worden ist durch die erste Binärisierungseinheit;
eine Verbindungszeichenschätzeinheit zum Abschätzen, ob dort verbundene Zeichen gemäß des ersten binärisierten im zweiten Bildspeicher gespeicherten Bildes vorhanden sind.
eine zweite Binärisierungseinheit zum Erstellen eines zweiten binärisierten Bildes durch Überführen der schwarzen Pixel in weiße Pixel, wenn die Verbindungszeichenschätzeinheit viele verbundene Zeichen schätzt, in der Dichtewerte nur von den Pixeln der Zeichenbilder genommen werden an einer Position, die äquivalent ist zu der der schwarzen Pixel des ersten binärisierten Bildes, basierend auf den Zeichenbildern, die gespeichert sind im ersten Bildspeicher, und das erste binärisierte Bild gespeichert ist im zweiten Bildspeicher und ein Histogramm registriert ist, und ein Schwellenwert erhalten wird, basierend auf dem registrierten Histogramm, außerhalb der schwarzen Pixel des ersten binärisierten Bildes, dessen Dichtewert an den gleichen Koordinaten der Zeichenbilder höher ist als der erhaltene Schwellenwert;
einen dritten Bildspeicher zum Speichern des zweiten binärisierten Bildes, das hergestellt worden ist durch die zweite Binärisierungseinheit;
eine Zeichenseparierungseinheit, um eine verbundene Zeichenposition zu bestimmen, basierend auf den Zeichenbildern, die im ersten Bildspeicher gespeichert sind, wobei das erste binärisierte Bild im zweiten Bildspeicher gespeichert ist und das zweite binärisierte Bild im dritten Bildspeicher gespeichert ist, und zum Separieren des verbundenen Zeichenbildes in einzelne Zeichen gemäß der bestimmten Zeichenpositionsinformation; und
eine Erkennungseinheit zum Erfassen der einzelnen Zeichen, die separiert sind durch die Zeichenseparierungseinheit.

## Revendications

1. Procédé d'extraction de caractères dans un dispositif de reconnaissance de caractères pour reconnaître des caractères selon des images de caractère lumière et ombre entrées, comprenant :
une première étape pour obtenir une première image binarisée des images de caractères entrées binarisées conformément à une première valeur de seuil basée sur au moins une valeur de densité de chaque pixel dans les images de caractères entrées pour séparer la première image binarisée dans une zone de caractère et une zone d'arrière-plan ;
une deuxième étape pour obtenir une deuxième image binarisée en binarisant des parties correspondant à la zone de caractère séparée dans la première étape conformément à une deuxième valeur de seuil basée sur une valeur de densité de chaque pixel correspondant à la zone de caractère de la première image binarisée pour séparer la deuxième image binarisée en au moins deux zones ; et
une troisième étape pour séparer la première image binarisée en caractères individuels séparés conformément à la deuxième image binarisé séparée dans la deuxième étape.

2. Procédé selon la revendication 1, dans lequel la troisième étape comprend une étape de séparation des caractères en caractères individuels en utilisant une ligne de pixels ou une colonne de pixels comme point de séparation, qui a une grande différence entre la première image binarisée obtenue dans la première étape et la deuxième image binarisée obtenue dans la deuxième étape.

3. Procédé selon la revendication 1, dans lequel la troisième étape comprend une étape consistant à comparer entre valeurs de densité des deux côtés d'une région à séparer et une valeur de densité de la région elle-même à séparer et en séparant les caractères en caractères individuels uniquement lorsque les valeurs de densité des deux côtés sont inférieures à la valeur de densité de la région elle-même à séparer.

4. Procédé selon la revendication 1, dans lequel la deuxième étape comprend une étape consistant à séparer les caractères en caractères individuels sur la base d'un histogramme qui est formé en utilisant les valeurs de densité des pixels aux positions applicables à la zone de caractère.

5. Procédé selon la revendication 2, dans lequel la décision d'un point de séparation sur la base d'une différence entre la valeur de densité de la première image binarisée obtenue dans la première étape et la valeur de densité de la deuxième image binarisée obtenue dans la deuxième étape, la valeur de seuil pour décider du point de séparation est modulée sur la base d'une valeur de définition de l'image de caractère entrée.

6. Procédé de séparation de caractères selon la revendication 1 comprenant en outre les étapes consistant en :
une quatrième étape pour juger si les images de caractères sont pontés sur la base des premières images binaires obtenues dans la première étape, dans laquelle les deuxième et troisième étapes sont exécutées lorsque les caractères sont jugés comme étant pontés dans la quatrième étape.

7. Dispositif d'extraction de caractères dans un dispositif de reconnaissance de caractères pour reconnaître des caractères selon des images de caractères de lumière et d'ombre entrées, comprenant
un premier moyen pour obtenir une première image binarisée des images de caractères entrés binarisées conformément à une première valeur de seuil basée sur au moins une valeur de densité de chaque pixel dans les images de caractères entrées pour séparer la première image binarisée en une zone de caractère et une zone d'arrière-plan ;
un deuxième moyen pour obtenir une deuxième image binarisée en binarisant des portions correspondant à la zone de caractère séparée par le premier moyen conformément à une deuxième valeur de seuil basée sur une valeur de densité de chaque pixel correspondant à la zone de caractère de la première image binarisée pour séparer la deuxième image binarisée en deux zones ou davantage ; et
un troisième moyen pour séparer la première image binarisée en caractères individuels séparés conformément à la deuxième image binarisée séparée par le deuxième moyen.

8. Dispositif selon la revendication 7, dans lequel le troisième moyen comprend un moyen pour séparer les caractères en caractères individuels en utilisant une ligne de pixels ou une colonne de pixels comme point de séparation, qui a une grande différence entre la première image binarisée obtenue par le premier moyen et la deuxième image binarisée obtenue par le deuxième moyen.

9. Dispositif selon la revendication 7, dans lequel le troisième moyen comprend un moyen pour comparer entre valeurs de densité des deux côtés d'une région à séparer et une valeur de densité de la région elle-même à séparer et en séparant les caractères en caractères individuels uniquement lorsque les valeurs de densité des deux côtés sont inférieures à la valeur de densité de la région elle-même à séparer.

10. Dispositif selon la revendication 7, dans lequel le deuxième moyen comprend un moyen pour séparer les caractères en caractères individuels sur la base d'un histogramme qui est formé en utilisant des valeurs de densité des pixels aux positions applicables à la zone de caractère.

11. Dispositif selon la revendication 8, dans lequel la décision d'un point de séparation basé sur une différence entre la valeur de densité de la zone de caractère obtenue par le premier moyen et la valeur de densité de la zone obtenue par le deuxième moyen, une valeur de seuil pour décider d'un point de séparation est modulée sur la base d'une valeur de résolution d'une image de caractère entrée.

12. Dispositif de reconnaissance de caractères comprenant :
un scanner pour acquérir des images de caractères en lisant par procédé optique des images de document entrées ;
une première mémoire d'images pour stocker les images de caractères acquises par le scanner ;
une première unité de binarisation pour binariser les images de caractères stockées dans la première mémoire d'images pour produire une première image binarisée ;
une deuxième mémoire d'images pour stocker la première image binarisée produite par la première unité de binarisation ;
une unité d'estimation de caractères de pont pour estimer s'il y a des caractères pontés conformément à la première image binarisée dans la deuxième mémoire d'images ;
une deuxième unité de binarisation pour produire une deuxième image binarisée en inversant les pixels noirs en pixels blancs lorsque l'unité d'estimation de caractères de pont estime plusieurs caractères pontés, dans lesquels des valeurs de densité sont prises uniquement à partir des pixels des images de caractères à une position équivalente à celle des pixels noirs de la première image binarisée sur la base des images de caractères stockées dans la première mémoire d'images et la première image binarisée stockée dans la deuxième mémoires d'images et un histogramme est enregistré, et une valeur de seuil est obtenue sur la base de l'histogramme enregistré, à partir des pixels noirs de la première image binarisée, dont la valeur de densité aux mêmes coordonnées des images de caractères est supérieure à la valeur de seuil obtenue ;
une troisième mémoire d'images pour stocker la deuxième image binarisée produite par la deuxième unité de binarisation ;
une unité de séparation de caractères pour décider d'une position de caractère ponté sur la base des images de caractères stockées dans la première mémoire d'images, la première image binarisée stockée dans la deuxième mémoire d'images et la deuxième image binarisée stockée dans la troisième mémoire d'images et une image de caractère ponté séparée, en deux caractères individuels conformément aux informations de position de caractère décidée ; et
une unité de reconnaissance pour reconnaître les caractères individuels séparés par l'unité de séparation de caractères.
